(19) Europäisches Patentamt
European Patent Office
Office européen des brevets

(11) EP 4 318 095 A1

(12) **EUROPEAN PATENT APPLICATION**
published in accordance with Art. 153(4) EPC

(43) Date of publication:
**07.02.2024 Bulletin 2024/06**

(21) Application number: **22781231.0**

(22) Date of filing: **31.03.2022**

(51) International Patent Classification (IPC):
***G02C 7/02*** *(2006.01)* ***C08G 18/40*** *(2006.01)*
***C09D 5/00*** *(2006.01)* ***G02B 1/10*** *(2015.01)*
***G02C 7/00*** *(2006.01)*

(52) Cooperative Patent Classification (CPC):
**C08G 18/40; C09D 5/00; G02B 1/10; G02C 7/00; G02C 7/02**

(86) International application number:
**PCT/JP2022/016495**

(87) International publication number:
**WO 2022/211021 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061567**

(71) Applicant: **Hoya Lens Thailand Ltd.**
**Pathumthani 12130 (TH)**

(72) Inventors:
- **HOSHI, Yuji**
  **Tokyo 160-8347 (JP)**
- **KOJIMA, Kenji**
  **Tokyo 160-8347 (JP)**

(74) Representative: **Kraus & Lederer Patentanwälte PartGmbB**
**Thomas-Wimmer-Ring 15**
**80539 München (DE)**

# (54) SPECTACLE LENS ANTI-FOGGING COMPOSITION AND SPECTACLE LENS

(57) A composition for an antifogging film of a spectacle lens, wherein the composition has a viscosity at 15°C of 20 mPa · s or more and 80 mPa · s or less, and a solid content of 10 mass% or more and 25 mass% or less.

EP 4 318 095 A1

## Description

### Technical Field

The present disclosure relates to a composition for an antifogging film of a spectacle lens, and a spectacle lens.

### Background Art

Various techniques for preventing articles such as automobile headlamps, meter panels, window glasses, lenses, and mirrors from being "fogged" have been conventionally studied. As a technique for preventing "fogging", it is common to apply a surfactant to a surface to form an antifogging layer (hereinafter, also referred to as an antifogging film). In this case, the persistence of the effect is extremely short, and the effect cannot be sustained unless the surfactant is applied again in a few days. When the dirt of the optical article is wiped with water or the like, the antifogging layer of the surfactant disappears together with the dirt, and the antifogging effect is lost. In addition, the antifogging layer formed by applying a surfactant to the surface of the lens is insufficient to prevent "fogging" under a high humidity environment, and there is room for improvement. Therefore, recently, a technique for applying a water-absorbent substance on an article substrate instead of a surfactant, to form an antifogging film having water absorption performance and to thereby prevent "fogging" has been studied.

For example, Patent Literature 1 describes an antifogging optical article including an optical article substrate, and a water-absorbent film formed on the optical article substrate, wherein the water-absorbent film has a multilayer structure of two or more layers. For example, Patent Literature 2 discloses an antifogging optical article in which a water absorbing layer containing a urethane or acrylic resin having a specific polyoxyethylene chain as a main component is formed on the surface of a glass or plastic substrate, and a water-repellent layer containing at least one of an amino-modified silicone or a mercapto-modified silicone as a main component is formed on the surface of the water absorbing layer.

### Citation List

### Patent Literature

Patent Literature 1: JP 2000-75104 A
Patent Literature 2: WO 2013/005710 A

### Summary of Invention

### Technical Problem

The antifogging films having water absorption performance described in Patent Literatures 1 and 2 are excellent in antifogging properties and antifogging durability as compared with a case where an antifogging layer is formed by applying a surfactant to a conventional surface.

However, since such an antifogging film is usually formed by applying a liquid coating liquid for forming an antifogging film to a substrate to form a film, bubbles already contained in the coating liquid or bubbles caught at the time of application may adhere onto the substrate. As described above, when the antifogging film is dried and cured in a state where bubbles adhere to the substrate, there is a problem that the antifogging film is formed in a state where the shape of the bubbles remains, and the appearance of the obtained article is impaired. In particular, it is necessary to produce a spectacle lens suitable for eyes of an individual person, and the shape of the spectacle lens is also various, and a large amount of bubbles may adhere onto the substrate depending on the shape. In view of such a problem, an antifogging liquid in which generation of bubbles is suppressed has been required.

In view of the above problems, an object of an embodiment of the present disclosure is to provide a composition for an antifogging film of a spectacle lens which is capable of producing a spectacle lens excellent in antifogging properties and appearance, and a spectacle lens excellent in antifogging properties and appearance.

### Solution to Problem

The embodiment of the present disclosure relates to the following [1] to [8].

[1] A composition for an antifogging film of a spectacle lens, wherein the composition has a viscosity at 15°C of 20 mPa • s or more and 80 mPa • s or less, and a solid content of 10 mass% or more and 25 mass% or less.
[2] The composition for an antifogging film of a spectacle lens according to [1], wherein the viscosity at 15°C is 24 mPa · s or more.
[3] The composition for an antifogging film of a spectacle lens according to [1] or [2], wherein the solid content is 17 mass% or more.
[4] The composition for an antifogging film of a spectacle lens according to any one of [1] to [3], wherein the composition contains components (A) to (C):

Component (A): a (meth)acrylic resin having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 1]

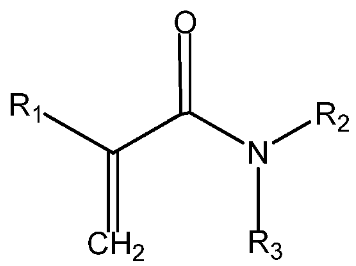

(1)

wherein $R_1$ is a hydrogen atom or a methyl group, $R_2$ and $R_3$ are each independently a hydrogen atom or an alkyl group having 1 to 3 carbon atoms, and $R_2$ and $R_3$ may be the same or different,

[Chemical Formula 2]

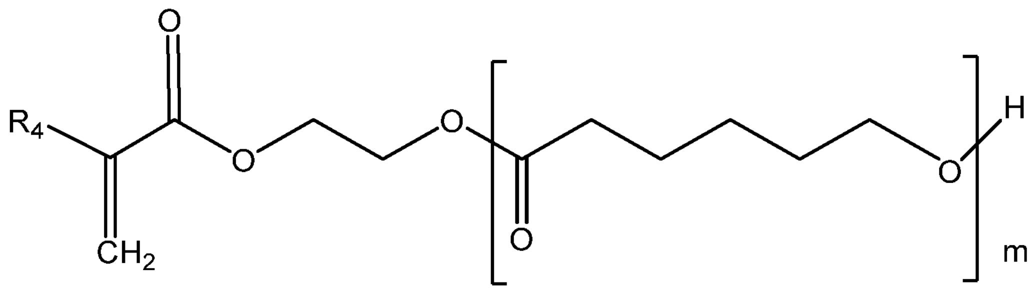

(2)

wherein $R_4$ is a hydrogen atom or a methyl group, and m is an integer of 1 to 5, and

[Chemical Formula 3]

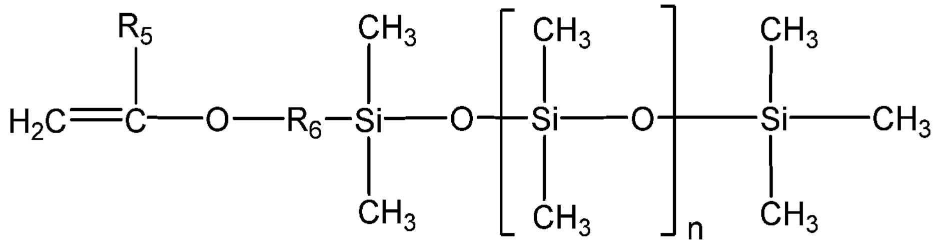

(3)

wherein $R_5$ is a hydrogen atom or a methyl group, $R_6$ is a divalent organic group, and n is 0 or an integer of 1 or more.

[5] A spectacle lens including an antifogging film obtained by curing the composition for an antifogging film of a spectacle lens according to any one of [1] to [4].
[6] The spectacle lens according to [5], wherein the antifogging film is an outermost layer.
[7] The spectacle lens according to [5] or [6], wherein the spectacle lens has a substrate, and an antifogging film directly on the substrate.
[8] The spectacle lens according to any one of [5] to [7], wherein the antifogging film is a single layer.

Advantageous Effects of Invention

According to an embodiment of the present disclosure, it is possible to provide a composition for an antifogging film of a spectacle lens which is capable of producing a spectacle lens excellent in antifogging properties and appearance, and a spectacle lens excellent in antifogging properties and appearance.

Description of Embodiments

Hereinafter, embodiments and examples of the present disclosure will be described. The same or corresponding parts are denoted by the same reference numerals, and the description thereof may not be repeated. In the embodiments and examples described below, when referring to the number, amount, and the like, the scope of the present disclosure is not necessarily limited to the number, amount, and the like unless otherwise specified. In the following embodiments, each component is not necessarily essential to the embodiments and examples of the present disclosure unless otherwise specified.
In the notation of the group (atomic group) in the present specification, the notation that does not indicate whether it is substituted or unsubstituted includes both groups having no substituent and groups having a substituent. For example, the "alkyl group" includes an alkyl group having no substituent (unsubstituted alkyl group) and an alkyl group having a substituent (substituted alkyl group).
The notation "(meth)acryl" in the present specification represents a concept including both acryl and methacryl. The same applies to similar notations such as " (meth)acrylate".
In the present specification, the constituent unit derived from the monomer (a-1) may be referred to as a "constituent unit (a-1)", the constituent unit derived from the monomer (a-2) as a "constituent unit (a-2)", the constituent unit derived from the monomer (a-3) as a "constituent unit (a-3)", and the constituent unit derived from the monomer (a-4) as a "constituent unit (a-4)".
In the present disclosure, the "viscosity" of the composition for an antifogging film of a spectacle lens (hereinafter, also referred to as an antifogging film composition) is a value measured at a temperature of 15°C in accordance with JIS Z 8803: 2011, section 11 (viscosity measurement method by vibration viscometer). The vibration viscometer is, for example, a vibration type viscometer "VM-10A" (manufactured by SEKONIC Corporation).
The "solid content" in the antifogging film composition means the content of components other than a solvent.
The "carbon number" for a group having a substituent means the number of carbon atoms in a portion excluding the substituent.

[Composition for antifogging film of spectacle lens]

The antifogging film composition according to an embodiment of the present disclosure has a viscosity at 15°C of 20 mPa • s or more and 80 mPa • s or less, and a solid content of 10 mass% or more and 25 mass% or less.
When the viscosity and the solid content of the antifogging film composition are in the above ranges as described above, bubbles already contained in the antifogging film composition and bubbles caught at the time of application can be quickly floated. It is considered that the antifogging film composition is suppressed from being applied and cured in a state of containing bubbles on the spectacle lens substrate. As a result, it is possible to suppress formation of the antifogging film in a state where the shape of the bubble remains. Further, when the viscosity and the solid content of the antifogging film composition are in the above ranges, it is possible to prevent a phenomenon that a liquid pool originated from the antifogging film composition is generated at the peripheral part of the lens to increase the film thickness of the antifogging film at the peripheral part, resulting in defective appearance.
When the antifogging film composition has the viscosity and the solid content described above, it is possible to secure a film thickness that can provide an antifogging film having excellent antifogging properties.

<Viscosity>

The viscosity of the antifogging film composition at 15°C is preferably 22 mPa • s or more, more preferably 23 mPa • s or more, and still more preferably 24 mPa • s or more from the viewpoint of obtaining a spectacle lens having more excellent antifogging properties, and is preferably 65 mPa • s or less, more preferably 50 mPa • s or less, and still more preferably 45 mPa · s or less from the viewpoint of obtaining a spectacle lens having excellent appearance.

<Solid content>

The solid content of the antifogging film composition is preferably 13 mass% or more, more preferably 15 mass% or more, still more preferably 16 mass% or more, and still even more preferably 17 mass% or more from the viewpoint of obtaining a spectacle lens having more excellent antifogging properties, and is preferably 24.8 mass% or less from the viewpoint of obtaining a spectacle lens having excellent appearance.

The antifogging film composition preferably contains the following components (A) to (C) from the viewpoint of obtaining an antifogging film excellent in antifogging properties:

Component (A): a (meth)acrylic resin having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 4]

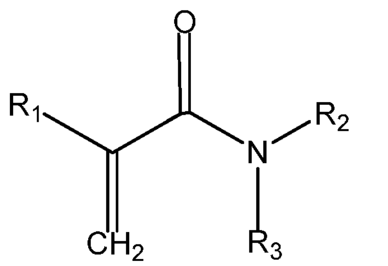

(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 5]

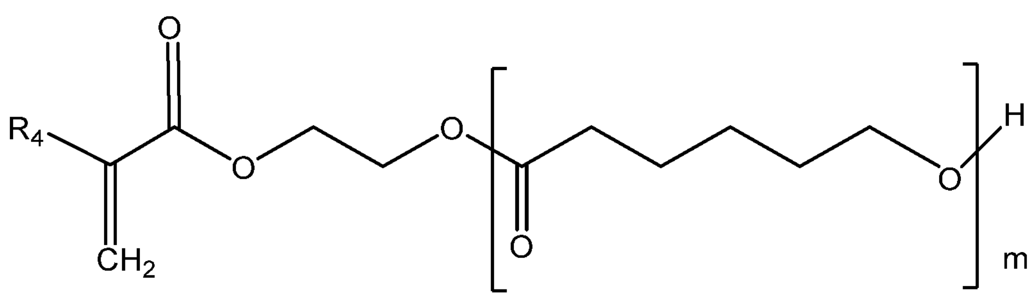

(2)

wherein $R_4$ is a hydrogen atom or a methyl group, and m is an integer of 1 to 5, and

[Chemical Formula 6]

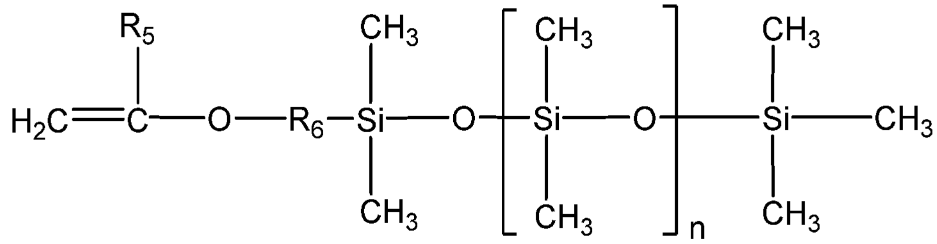

(3)

wherein $R_5$ is a hydrogen atom or a methyl group, $R_6$ is a divalent organic group, and n is 0 or an integer of 1 or more.

The constituent unit (a-1) contained in the component (A) (also referred to as a (meth)acrylic resin) has an amide group, is highly hydrophilic, and easily retains moisture therein. It is therefore considered that moisture adhering to the surface of the antifogging film obtained by curing the antifogging film composition is easily absorbed into the cured film. In addition, it is considered that by blending the polyol compound (B), a gap for sufficiently absorbing moisture can be present while maintaining the crosslinking density required as the antifogging film. For these reasons, it is considered that antifogging properties are imparted.

The constituent unit (a-2) contained in the resin (A) is a constituent unit having a polycaprolactone structure, and contributes to improvement in flexibility and elasticity of the antifogging film due to its flexible chemical skeleton. In addition, by containing the constituent unit (a-3) which is more rigid than the constituent unit (a-2), a balance between flexibility and elasticity is secured. On the other hand, the polydimethylsiloxane chain of the constituent unit (a-4) contributes to improvement in slipperiness with respect to the antifogging film. Therefore, when an external force is applied to the antifogging film, the above-described two effects of absorbing the external force by the flexibility and elasticity of the antifogging film and releasing the external force to the outside of the antifogging film by the slipperiness are synergistically exhibited. As a result, it is considered that the antifogging film is less likely to be scratched.

In the antifogging film composition, preferably, the proportion of the constituent unit derived from the monomer (a-1) is 20 mass% or more and 65 mass% or less, the proportion of the constituent unit derived from the monomer (a-2) is 10 mass% or more and 40 mass% or less, and the proportion of the constituent unit derived from the monomer (a-4) is 1 mass% or more and 10 mass% or less, with respect to 100 mass% of all the constituent units constituting the component (A). In the antifogging film composition, the ratio (NCO)/(OH) of the number (NCO) of isocyanate groups contained in the component (C) to the total amount (OH) obtained by adding the number of hydroxyl groups contained in the component (A) and the number of hydroxyl groups contained in the component (B) is preferably 0.15 or more and 0.55 or less.

It is considered that when the composition of the antifogging film composition is as described above, the equivalent ratio (NCO/OH) is set to a specific range smaller than 1 while maintaining the balance (amount ratio) between the constituent unit (a-2) and the constituent unit (a-3) having a hydroxyl group in the component (A), so that the hardness of the antifogging film can be increased to an extent that the friction resistance is improved. In addition, it is considered that the equivalent ratio (NCO/OH) is set to a specific range smaller than 1 while maintaining the structural balance between the constituent unit (a-2) and the constituent unit (a-3) having a hydroxyl group in the component (A), so that the crosslinking density of the antifogging film is increased, and the solvent resistance of the antifogging film is improved.

The components contained in the antifogging film composition of the present embodiment will be described below.

<Component (A): (meth)acrylic resin>

The antifogging film composition of the present embodiment preferably contains a (meth)acrylic resin as the component (A), that is, a (meth)acrylic resin having a constituent unit derived from a monomer (a-1) represented by the general formula (1), a constituent unit derived from a monomer (a-2) represented by the general formula (2), a constituent unit derived from a hydroxyalkyl (meth)acrylate (a-3), and a constituent unit derived from a monomer (a-4) represented by the general formula (3).

As described above, it is considered that the constituent unit (a-1) is mainly involved in the absorption of water (moisture).

The (meth)acrylic resin can be typically obtained by polymerizing the monomer (a-1), the monomer (a-2), the monomer (a-3), and the monomer (a-4). Details of the polymerization method will be described later.

In the present embodiment, 100% of the constituent units constituting the (meth)acrylic resin need not be a constituent unit derived from a (meth)acrylic monomer. That is, the (meth)acrylic resin may partially (but not entirely)

contain a constituent unit derived from a monomer other than a (meth)acrylic monomer.

In order to obtain the effect derived from the (meth)acrylic structure sufficiently, 50 mass% or more of all the constituent units of the (meth)acrylic resin is preferably a constituent unit derived from a (meth)acrylic monomer. More preferably, 80 mass% or more of all the constituent units of the (meth)acrylic resin is a constituent unit derived from a (meth)acrylic monomer. Still more preferably, all (100%) constituent units of the (meth)acrylic resin are a constituent unit derived from a (meth)acrylic monomer.

The monomer (a-1) is not particularly limited as long as the monomer has the structure of the general formula (1) described above. Specific examples thereof include (meth)acrylamide, N-methylacrylamide, N,N-dimethyl (meth)acrylamide, N-ethyl (meth)acrylamide, N,N-diethyl (meth)acrylamide, N-n-propyl (meth)acrylamide, and N-isopropyl (meth)acrylamide.

At least one kind of the monomer (a-1) may be used, and two or more kinds thereof may be used in combination. For example, a (meth)acrylic resin may be obtained by performing a polymerization reaction using two or more kinds of the monomers listed above.

The monomer (a-1) particularly preferably contains N,N-dimethyl (meth)acrylamide or N,N-diethyl (meth)acrylamide from the viewpoint of improving the antifogging performance of the antifogging film to exhalation and having a high effect of suppressing the occurrence of fogging in a steam test.

In the present embodiment, the content of the constituent unit derived from the monomer (a-1) in the (meth)acrylic resin is preferably 20 to 65 mass% with respect to the total amount of all the constituent units of the resin. The content is more preferably 35 to 60 mass%, and still more preferably 40 to 55 mass%. When the content of the constituent unit derived from the monomer (a-1) is 20 mass% or more, an antifogging film exhibiting antifogging performance suitable for practical use is easily formed. When the content of the constituent unit derived from the monomer (a-1) is 65 mass% or less, the ratio of constituent units derived from other monomers is prevented from being relatively decreased, making it easy to maintain the balance of the entire composition.

The monomer (a-2) is not particularly limited as long as the monomer has the structure of the general formula (2) .

In the present embodiment, the (meth)acrylic resin contains the constituent unit derived from the monomer (a-2) in an amount of preferably 10 to 40 mass%, more preferably 20 to 38 mass%, and still more preferably 25 to 35 mass% with respect to the total amount of all the constituent units of the resin.

When the content of the constituent unit derived from the monomer (a-2) is 10 mass% or more, the flexibility of the antifogging film is easily secured, and when the content is 40 mass% or less, the elasticity of the antifogging film is easily secured.

The (meth)acrylic resin may contain a plurality of types of repeating units derived from the monomer (a-2).

The monomer (a-3) is a hydroxyalkyl (meth)acrylate. Specific examples of the hydroxyalkyl (meth)acrylate include hydroxyethyl (meth)acrylate, hydroxypropyl (meth)acrylate, and hydroxybutyl (meth)acrylate. In the present embodiment, among these, hydroxyethyl (meth)acrylate is preferable.

In the present embodiment, the content of the constituent unit derived from the monomer (a-3) in the (meth)acrylic resin is preferably 1 to 30 mass%, more preferably 2 to 20 mass%, and still more preferably 3 to 15 mass% with respect to the total amount of all the constituent units of the (meth)acrylic resin.

The monomer (a-3) has a hydroxyl group as with the monomer (a-2), and undergoes a crosslinking reaction with a polyfunctional isocyanate compound described later to form the antifogging film.

In the present embodiment, the monomer (a-2) is subjected to a crosslinking reaction with a polyfunctional isocyanate compound together with the monomer (a-3) instead of subjecting only the monomer (a-2) to a crosslinking reaction to form the antifogging film, thereby yielding an antifogging film having various physical properties.

As described above, since the (meth)acrylic resin contains the constituent unit derived from the monomer (a-2) and the constituent unit derived from the monomer (a-3), the (meth)acrylic resin has a hydroxyl group as a whole, that is, has a hydroxyl value. Therefore, the (meth)acrylic resin can form a crosslinked structure by being reacted with a polyfunctional isocyanate compound described later together with a polyol compound described later.

The hydroxyl value of the (meth)acrylic resin is preferably 40 to 150 mgKOH/g, more preferably 70 to 140 mgKOH/g, and still more preferably 90 to 130 mgKOH/g.

Within this numerical range, the (meth)acrylic resin reacts with a polyfunctional isocyanate compound (described later) together with a polyol compound (described later), so that the crosslinked structure is easily controlled appropriately. Therefore, the antifogging film can be hardened while maintaining the flexibility and elasticity of the antifogging film. Therefore, it is easy to achieve a higher level of compatibility between the scratch resistance, reduction in friction resistance, and solvent resistance of the antifogging film.

The hydroxyl value means the number of mg of potassium hydroxide required to neutralize acetic acid bonded to a hydroxyl group when 1 g of a sample is acetylated.

The monomer (a-4) is not particularly limited as long as the monomer has the structure of the general formula (3) .

The (meth)acrylic resin may contain a plurality of types of repeating units derived from the monomer (a-4). For example, a (meth)acrylic resin may be obtained by performing a polymerization reaction using two or more kinds of the

monomers listed above.

In the present embodiment, the content of the constituent unit derived from the monomer (a-4) in the (meth)acrylic resin is preferably 1 to 10 mass%, more preferably 2 to 8 mass%, and still more preferably 3 to 7 mass% with respect to the total amount of all the constituent units of the resin.

When the content of the constituent unit derived from the monomer (a-4) is 1 mass% or more, an antifogging film that satisfies scratch resistance is easily obtained. When the content is 10 mass% or less, a homogeneous (meth)acrylic resin is easily synthesized.

The (meth)acrylic resin may or may not include any constituent unit (constituent unit (a-5)) other than the constituent unit (a-1), the constituent unit (a-2), the constituent unit (a-3), and the constituent unit (a-4). Examples of the constituent unit (a-5) include constituent units derived from monomers represented below. By including such a constituent unit in the (meth)acrylic resin, the glass transition temperature of the (meth)acrylic resin and the physical properties (hardness, softness, and the like of the antifogging film) of the antifogging film can be adjusted and optimized.

Examples of the constituent unit (a-5) include constituent units derived from a monomer represented by the general formula $CH_2$=CR-COO-R' where R is a hydrogen atom or a methyl group, and R' is an alkyl group, a monocyclic or polycyclic cycloalkyl group, an aryl group, or an aralkyl group.

Specific examples of the monomer include methyl (meth)acrylate, ethyl (meth)acrylate, n-butyl (meth)acrylate, isobutyl (meth)acrylate, tert-butyl (meth)acrylate, 2-ethylhexyl (meth)acrylate, isodecyl (meth)acrylate, n-lauryl (meth)acrylate, n-stearyl (meth)acrylate, phenyl (meth)acrylate, and benzyl (meth)acrylate.

Among them, a monomer in which R' is an alkyl group having 1 to 8 carbon atoms is preferable, a monomer in which R' is an alkyl group having 1 to 6 carbon atoms is more preferable, and a monomer in which R' is an alkyl group having 1 to 4 carbon atoms is still more preferable.

The (meth)acrylic resin may include a plurality of types of repeating units corresponding to the constituent unit (a-5). For example, a (meth)acrylic resin may be obtained by performing a polymerization reaction using two or more kinds of the monomers listed above as specific examples.

When the (meth)acrylic resin contains the constituent unit (a-5), the content thereof is preferably 1 to 40 mass%, more preferably 3 to 30 mass%, and still more preferably 5 to 20 mass% with respect to the total amount of all the constituent units of the (meth)acrylic resin.

The mass average molecular weight (Mw) of the (meth)acrylic resin is not particularly limited, but is preferably 10,000 to 100,000, more preferably 20,000 to 70,000, and still more preferably 30,000 to 60,000. When the mass average molecular weight is 10,000 or more, it is easy to obtain desired antifogging performance, and when the mass average molecular weight is 100,000 or less, the coating composition tends to be excellent in application suitability when applied to an object to be coated such as a spectacle lens.

The mass average molecular weight can be determined by gel permeation chromatography (GPC) using polystyrene as a standard substance.

The glass transition temperature of the (meth)acrylic resin is not particularly limited, but is preferably 20 to 120°C, more preferably 30 to 110°C, and still more preferably 35 to 100°C.

The glass transition temperature of the (meth)acrylic resin can be determined by various methods, and can be determined, for example, based on the following Fox's equation.

$$1/Tg = (W_1/Tg_1) + (W_2/Tg_2) + (W_3/Tg_3) + \ldots + (W_n/Tg_n)$$

wherein Tg represents the glass transition temperature (K) of the (meth)acrylic resin, $W_1$, $W_2$, $W_3$ ... $W_n$ each represent the mass fraction of each monomer, $Tg_1$, $Tg_2$, $Tg_3$ ... $Tg_n$ each represent the glass transition temperature (K) of a homopolymer composed of a monomer corresponding to the mass fraction of each monomer.

In the present specification, the glass transition temperature of the (meth)acrylic resin (not the glass transition temperature of the antifogging film, but the glass transition temperature of the (meth)acrylic resin alone) means a glass transition temperature determined based on the above equation. Note that the glass transition temperature of a monomer whose glass transition temperature is unknown, such as special monomers or polyfunctional monomers is determined using only a monomer whose glass transition temperature is known.

The (meth)acrylic resin can be typically obtained by a polymerization reaction. The polymerization reaction may be performed by various methods such as radical polymerization, cationic polymerization, and anionic polymerization, and among them, radical polymerization is preferable. The polymerization may be any of solution polymerization, suspension polymerization, emulsion polymerization, and the like. Among them, solution polymerization is preferable from the viewpoint of precise control of polymerization and the like.

As the polymerization initiator for radical polymerization, a known polymerization initiator can be used. Examples of the polymerization initiator include azo-based initiators such as azobisisobutyronitrile, 2,2-azobis(2-methylbutyronitrile), 2,2-azobis(2-methylpropionitrile), and 2,2-azobis(2,4-dimethylvaleronitrile); peroxide-based initiators such as benzoyl peroxide, t-butyl peroxyoctanoate, diisobutyl peroxide, di(2-ethylhexyl)peroxypivalate, decanoyl peroxide, t-butyl peroxy-2-ethylhexanoate, and t-butyl peroxybenzoate; and redox-based initiators combining an oxidizing agent and a reducing agent, such as hydrogen peroxide and an iron(II) salt, and a persulfate and sodium bisulfite. These may be used singly or in combination of two or more kinds thereof.

The blending amount of the polymerization initiator is not particularly limited, but is preferably 0.001 to 10 parts by mass based on 100 parts by mass of the total amount of the mixed liquid of monomers to be polymerized.

In the polymerization reaction, a known chain transfer agent, a polymerization inhibitor, a molecular weight modifier, or the like may be appropriately used. Further, the polymerization reaction may be performed in one stage or in two or more stages. The temperature of the polymerization reaction is not particularly limited, but is typically in a range of 50°C to 200°C, preferably 80°C to 150°C.

<Component (B): polyol compound>

The antifogging film composition of the present embodiment preferably contains a polyol compound. When the antifogging film composition contains the polyol compound, the polyol compound reacts with the polyfunctional isocyanate compound described later together with the (meth)acrylic resin, making it possible to form an antifogging film having more excellent antifogging durability. The number of hydroxyl groups of the polyol compound in one molecule is 2 or more, preferably 2 to 6, and more preferably 2 to 4.

The polyol compound preferably contains at least one or more polyol compounds selected from the group consisting of a polycaprolactone polyol, a polycarbonate polyol, and a polyether polyol. The chemical structures of these polyol compounds are moderately flexible and elastic. Therefore, such polyol compounds can further improve the flexibility and elasticity of the cured film.

The polycaprolactone polyol can be used without particular limitation as long as it is a compound having a ring-opened structure of caprolactone and two or more hydroxyl groups in one molecule.

The polycarbonate polyol can be used without particular limitation as long as it is a compound having a carbonate group represented by -O-(C=O)-O- and two or more hydroxyl groups in one molecule. The polycarbonate polyol can be obtained by reacting one or more kinds of polyol raw materials (polyhydric alcohols) with a carbonate ester or phosgene.

The polyol raw material is not particularly limited, and examples thereof include aliphatic polyols, polyols having an alicyclic structure, and aromatic polyols. In the present embodiment, an aliphatic polyol having no alicyclic structure is preferable from the viewpoint of the flexibility of the cured film.

Examples of the carbonate ester include aliphatic carbonate esters such as dimethyl carbonate and diethyl carbonate; aromatic carbonate esters such as diphenyl carbonate; and cyclic carbonate esters such as ethylene carbonate. Among them, an aliphatic carbonate ester is preferable, and dimethyl carbonate is particularly preferable from the viewpoint of availability and ease of production.

The polyether polyol can be used without particular limitation as long as it is a compound having an ether bond (-O-) and two or more hydroxyl groups in one molecule.

Specific examples of the compound include polyether polyols obtained by addition polymerization of an alkylene oxide such as ethylene oxide, propylene oxide, or butylene oxide, using, as an initiator, a compound having two or more, preferably two or three active hydrogen groups such as a low molecular weight polyol such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer acid diol, bisphenol A, bis(β-hydroxyethyl)benzene, xylylene glycol, glycerin, trimethylolpropane, and pentaerythritol; or a low molecular weight polyamine such as ethylenediamine, propylenediamine, toluenediamine, meta-phenylenediamine, diphenylmethanediamine, and xylylenediamine; and polyether polyols obtained by ring-opening polymerization of a cyclic ether monomer including an alkyl glycidyl ether such as methyl glycidyl ether, an aryl glycidyl ether such as phenyl glycidyl ether, and tetrahydrofuran.

In the present embodiment, the polyol compound may be a compound corresponding to a plurality of polycaprolactone polyols, polycarbonate polyols, and polyether polyols. The polyol compound may be, for example, a polyether polyester polyol having an ether bond and an ester bond.

The polyol compound may also contain a plurality of types of polycaprolactone polyols, polycarbonate polyols, and polyether polyols.

The hydroxyl value of the polyol compound is preferably 50 to 500 mgKOH/g, more preferably 100 to 350 mgKOH/g, and still more preferably 150 to 250 mgKOH/g. By setting the amount of the hydroxyl group to an appropriate amount, the crosslinked structure formed by the reaction with the polyfunctional isocyanate compound described below is controlled, thus making it easy to improve the flexibility, elasticity, and the like of the cured film.

In the present embodiment, the mass average molecular weight (Mw) of the polyol compound is preferably 450 to 2,500, more preferably 500 to 1,500, and still more preferably 500 to 700. By setting the molecular weight to an appropriate value, it is possible to more easily achieve both suppression of the change in appearance of the cured film

due to improvement in flexibility and elasticity and durability of the cured film such as gasoline resistance, at a higher level.

The content of the polyol compound in the coating composition is preferably 5 to 200 parts by mass, more preferably 15 to 180 parts by mass, still more preferably 20 to 150 parts by mass, still even more preferably 20 to 100 parts by mass, still even more preferably 20 to 50 parts by mass, and still even more preferably 20 to 40 parts by mass with respect to 100 parts by mass of the (meth)acrylic resin. Within this numerical range, the performance derived from the polyol compound is easily obtained, and the balance with other components is easily achieved.

In the present embodiment, the polyol compound preferably contains a polycaprolactone polyol among the polycaprolactone polyol, the polycarbonate polyol, and the polyether polyol described above, and particularly preferably contains a polycaprolactone diol (a compound having a caprolactone structure and two hydroxyl groups) among polycaprolactone polyols.

This is because there is a tendency that the polycaprolactone diol as the polyol compound tends to have good compatibility with the (meth)acrylic resin as the component (A), which has the structure of the general formula (2) described above, that is, the caprolactone structure, and also tends to improve antifogging performance without excessively increasing the crosslinking density.

<Component (C): polyfunctional isocyanate compound>

The antifogging film composition of the present embodiment preferably contains a polyfunctional isocyanate compound as the component (C). When the antifogging film composition contains the polyfunctional isocyanate compound, the hydroxyl groups of the constituent unit (a-2) and the constituent unit (a-3) contained in the (meth)acrylic resin as the component (A) and the hydroxyl group of the polyol compound as the component (B), and the polyfunctional isocyanate compound cause a crosslinking reaction, so that an antifogging film having excellent antifogging durability is obtained.

The polyfunctional isocyanate compound is a compound having two or more isocyanate groups (including isocyanate groups protected by a leaving group) in one molecule. Preferably, the number of functional groups of the polyfunctional isocyanate compound is more preferably 2 to 6 per molecule, and still more preferably 2 to 4 per molecule.

Examples of the polyfunctional isocyanate compound include aliphatic diisocyanates such as lysine isocyanate, hexamethylene diisocyanate, and trimethylhexane diisocyanate; cyclic aliphatic diisocyanates such as hydrogenated xylylene diisocyanate, isophorone diisocyanate, methylcyclohexane-2,4-(or 2,6)-diisocyanate, 4,4'-methylenebis(cyclohexyl isocyanate), and 1,3-(isocyanatomethyl)cyclohexane; and tri- or higher functional isocyanates such as lysine triisocyanate.

As the polyfunctional isocyanate compound as the component (C), in addition to those described above, a multimer thereof such as a biuret type, an isocyanurate type, or an adduct type may be used. Among them, a biuret type polyfunctional isocyanate compound having moderate rigidity is preferable.

In the present embodiment, the content of the polyfunctional isocyanate compound in the coating composition is not particularly limited as long as it is blended according to the equivalent ratio (NCO)/(OH) described later. The content is usually 5 to 100 parts by mass, preferably 7 to 75 parts by mass, more preferably 10 to 60 parts by mass, still more preferably 10 to 50 parts by mass, still even more preferably 15 to 40 parts by mass, and still even more preferably 20 to 30 parts by mass with respect to 100 parts by mass of the (meth)acrylic resin. Within this numerical range, it is considered that necessary and sufficient crosslinking is performed in the cured film.

The molar amount (that is, equivalent ratio (NCO)/(OH)) of the isocyanate groups (including a blocked isocyanate group) contained in the polyfunctional isocyanate compound to the hydroxyl groups contained in the (meth)acrylic resin and the polyol compound is preferably in a range of 0.15 to 0.55. When the equivalent ratio (NCO)/(OH) is within this range, the crosslinking density becomes sufficiently high, and as a result, functions such as antifogging properties and solvent resistance as a cured film become sufficient.

From this viewpoint, the equivalent ratio (NCO)/(OH) is preferably 0.25 to 0.50 and more preferably 0.35 to 0.45.

<Form of antifogging film composition>

The antifogging film composition of the present embodiment may be a one-component type, that is, a state in which all components other than a solvent are substantially uniformly mixed (dissolved or dispersed) in the solvent. When the polyfunctional isocyanate compound is a blocked isocyanate, the one-component type is preferable.

As another aspect, the antifogging film composition of the present embodiment may be a two-component type. By preparing the antifogging film composition as a two-component type, the storage stability of the antifogging film composition can be improved.

For example, the antifogging film composition of the present embodiment may be composed of (1) a liquid A containing a (meth)acrylic resin and/or a polyol compound but not containing a polyfunctional isocyanate compound, and (2) a liquid B containing a polyfunctional isocyanate compound but not containing a (meth)acrylic resin and a polyol

compound. The liquid A and the liquid B may be stored in separate containers, and the liquid A and the liquid B may be mixed immediately before use (application).

In this case, components (additives and the like) other than the (meth)acrylic resin, the polyol compound, and the polyfunctional isocyanate compound may be contained in the liquid A, contained in the liquid B, or prepared in another container.

In particular, when the polyfunctional isocyanate compound is not a blocked isocyanate (that is, when the isocyanate group is present in the form of -NCO in the system), the antifogging film composition is preferably a two-component type.

<Solvent>

The antifogging film composition of the present embodiment may also contain a solvent. The use of the solvent makes it easy to adjust the viscosity and the solid content of the antifogging film composition.

Examples of the solvent include aromatic hydrocarbon solvents such as toluene and xylene; alcohol solvents such as methanol, ethanol, isopropyl alcohol, n-butanol, t-butanol, isobutanol, and diacetone alcohol; ketone solvents such as acetone, methyl ethyl ketone, methyl isobutyl ketone, and cyclohexanone; ester solvents such as ethyl acetate, propyl acetate, butyl acetate, and isobutyl acetate; and glycol ether solvents such as propylene glycol monomethyl acetate, propylene glycol monomethyl ether, and propylene glycol monomethyl ether acetate.

Among them, t-butanol, diacetone alcohol, methyl ethyl ketone, ethyl acetate, and propylene glycol monomethyl ether acetate are preferable from the viewpoint of low reactivity with isocyanate, solubility, drying property, and the like.

The content of the solvent in the antifogging film composition is preferably 20 to 90 mass%, more preferably 30 to 85 mass%, and still more preferably 35 to 80 mass% from the viewpoint of controlling the film thickness of the antifogging film.

The total content of the components (A), (B) and (C) in the solid content of the coating composition is preferably 60 mass% or more, more preferably 80 mass% or more, still more preferably 90 mass% or more, still even more preferably 95 mass% or more, and preferably 100 mass% or less, for example, 100 mass% from the viewpoint of improving antifogging properties and scratch resistance.

<Other additives>

The antifogging film composition may contain additives such as a curing catalyst, an ultraviolet absorber, a light stabilizer, a surfactant, a leveling agent, and an antifoaming agent as necessary.

The content of the additive is preferably 0.001 to 5 mass%, more preferably 0.01 to 4 mass%, and still more preferably 0.1 to 3 mass% with respect to the total mass of the coating composition.

The antifogging film composition can be prepared by dissolving or dispersing each component used as necessary in a solvent.

Each component can be dissolved or dispersed in the solvent simultaneously or sequentially in any order. A specific dissolution or dispersion method is not particularly limited, and a known method can be adopted without any limitation.

[Spectacle lens]

A spectacle lens according to an embodiment of the present disclosure includes a substrate and an antifogging film provided on the substrate.

<Lens substrate>

The lens substrate is, for example, a spectacle lens substrate.

Examples of the resin constituting the lens substrate include a polycarbonate resin, a urethane urea resin, an acrylic allyl resin, a (thio)urethane resin, a polysulfide resin, a polyamide resin, and a polyester resin. The (thio)urethane resin means at least one selected from a thiourethane resin and a urethane resin. Among them, a (thio)urethane resin and a polysulfide resin are preferable.

In addition, the lens substrate used for the spectacle lens of the present embodiment is preferably a plastic lens substrate having a refractive index of 1.50 or more, and more preferably a plastic lens substrate having a refractive index of 1.60 or more.

Preferable commercially available products of the plastic lens substrate include an allyl carbonate-based plastic lens "HILUX 1.50" (manufactured by HOYA Corporation, refractive index 1.50), a thiourethane-based plastic lens "EYAS" (manufactured by HOYA Corporation, refractive index 1.60), a thiourethane-based plastic lens "MERIA" (manufactured

by HOYA Corporation, refractive index 1.60), a thiourethane-based plastic lens "EYNOA" (manufactured by HOYA Corporation, refractive index 1.67), a polysulfide-based plastic lens "EYRY" (manufactured by HOYA Corporation, refractive index 1.70), and a polysulfide-based plastic lens "EYVIA" (manufactured by HOYA Corporation, refractive index 1.74).

The thickness and diameter of the substrate are not particularly limited. The thickness is usually about 1 to 30 mm, and the diameter is usually about 50 to 100 mm.

The lens substrate may be either a finish lens or a semi-finish lens.

The surface shape of the lens substrate is not particularly limited, and may be any of a flat surface, a convex surface, a concave surface, or the like.

The spectacle lens of the present disclosure may be any of a single focal lens, a multifocal lens, a progressive addition lens, or the like. In a progressive addition lens, usually, a near vision region (near portion) and a progressive region (intermediate region) are included in a lower region described above, a distance vision region (distance portion) is included in an upper region.

<Antifogging film>

By curing the antifogging film composition of the present embodiment, an antifogging film suitable for a spectacle lens can be formed. When the antifogging film composition of the present embodiment is used, it is possible to suppress bubbles from being contained in the antifogging film. Thus, a spectacle lens excellent in antifogging properties and appearance can be produced.

The antifogging film is preferably provided as the outermost layer of the spectacle lens from the viewpoint of sufficiently exhibiting antifogging properties. Further, the antifogging film may be provided only on any one of the main surfaces of the substrate, or may be provided on both surfaces of the substrate.

The antifogging film is preferably a layer having water absorbency from the viewpoint of obtaining a spectacle lens excellent in antifogging properties.

Here, the phrase "the antifogging film has water absorbency" means that the material constituting the antifogging film exhibits a property of taking moisture therein. The phrase "the antifogging film has water absorbency" specifically means that when a transparent substrate on which the antifogging film is formed is stored at room temperature, and then the transparent substrate provided with the antifogging film is placed at a position 35 mm away from the surface of hot water at 40°C, and exposed to vapor from the hot water for 15 seconds, there is no irregular reflection on the surface of the antifogging film due to small water droplets, and there is no distortion due to condensation on an image viewed through the transparent substrate provided with the antifogging film after the vapor is brought into contact with the transparent substrate.

In addition, the antifogging film is preferably obtained by curing the antifogging film composition containing the components (A) to (C). When the antifogging film is obtained by curing the antifogging film composition containing the components (A) to (C), the antifogging film can exhibit high durability even if located at the outermost layer of the spectacle lens.

As one aspect according to the present embodiment, the antifogging film is preferably provided directly on the substrate from the viewpoint of the antifogging durability.

The antifogging film may be a single layer or a multilayer composed of plurality of layers. The antifogging film is preferably a single layer from the viewpoint of productivity.

The thickness of the antifogging film is preferably 1 to 50 μm, more preferably 3 to 40 μm, still more preferably 5 to 30 μm, and still even more preferably 8 to 25 um from the viewpoint of improving antifogging properties.

<Other layers>

The spectacle lens may be provided with a functional layer other than the antifogging film.

Examples of the functional layer include a hard coat layer, an antireflection layer, and a primer layer.

The functional layer may be provided on a first main surface of the lens substrate, may be provided on a second main surface of the lens substrate, or may be provided on both the first main surface and the second main surface of the lens substrate. In addition, the antifogging film may be provided on the functional layer after providing the functional layer on the lens substrate, or the functional layer may be provided after providing the antifogging film on the lens substrate.

<Method for producing spectacle lens>

In one aspect of the method for producing a spectacle lens according to the present embodiment, a spectacle lens is obtained by applying an antifogging film composition (in the case of a two-component type, a mixture of two liquids) prepared by dissolving or dispersing the respective components used as necessary in a solvent onto a lens

substrate, and drying and curing the coating film at a predetermined temperature to form an antifogging film.

The application method is not particularly limited, and examples thereof include an air spray method, an airless spray method, an electrostatic coating method, a roll coater method, a flow coater method, a spin coating method, and a dipping method. A dipping method is preferable from the viewpoint of productivity.

After the application, the coating film is dried and cured at 20 to 160°C for 10 to 120 minutes, preferably at 60 to 120°C for 20 to 90 minutes, and further cooled at normal temperature to obtain an antifogging film. The temperature and time for drying and curing may be appropriately adjusted in consideration of the type of solvent, the heat resistance of the lens substrate, and the like.

Incidentally, after the functional layer (hard coat layer, primer layer, antireflection layer, and the like) described above is provided on the lens substrate, the antifogging film may be provided as necessary on the functional layer, or after the antifogging film is provided on the lens substrate, the functional layer may be provided on the antifogging film.

In the present disclosure, as for the examples of components, contents, and physical properties, matters exemplified or described as a preferable range in the detailed description of the invention may be combined with each other arbitrarily.

In addition, by adjusting the composition described in Examples so as to be the composition described in the detailed description of the invention, the invention can be performed in a similar manner to Examples in the entire claimed composition range.

## Examples

Next, the present disclosure will be described in more detail by way of Examples, but the present disclosure is not limited in any way by these Examples.

Hereinafter, the present disclosure will be described in more detail with reference to Examples.

### <Measurement and evaluation>

The following items were measured and evaluated for the antifogging film compositions and spectacle lenses obtained in Examples 1 and 2 and Comparative Examples 1 to 3 below. The measurement and evaluation results are shown in Table 1.

### (Hydroxyl value)

The hydroxyl value was measured and calculated according to the method specified in "7.1 Neutralization titration method" of JIS K 0070 "Test methods for acid value, saponification value, ester value, iodine value, hydroxyl value and unsaponifiable matter of chemical products".

The value of the acid value used for calculating the hydroxyl value was measured and calculated according to the method specified in "3.1 Neutralization titration method" of the JIS standard described above.

### (Number average molecular weight (Mn), mass average molecular weight (Mw), polydispersity index (Mw/Mn))

The number average molecular weight, mass average molecular weight, and polydispersity index were measured and calculated by gel permeation chromatography (GPC). The apparatus, conditions, and the like used are as follows.

· Equipment used: HLC-8220GPC (manufactured by Tosoh Corporation)
Column used: TSKgel SuperHZM-M, TSKgel GMHXL-H, TSKgel G2500HXL, TSKgel G5000HXL (manufactured by Tosoh Corporation)
· Column temperature: 40°C
Standard substance: TSKgel standard polystyrene A1000, A2500, A5000, F1, F2, F4, F10 (manufactured by Tosoh Corporation)
· Detector: RI (refractive index) detector
· Eluent: tetrahydrofuran
· Flow rate: 1 ml/min

### (Viscosity measurement)

The viscosity was measured at a measurement temperature of 15°C using a vibration type viscometer "VM-10A" (manufactured by SEKONIC Corporation). The measurement was performed in accordance with JIS Z 8803: 2011,

section 11 (viscosity measurement method by vibration viscometer).

(Measurement of antifogging film thickness)

The film thickness of the antifogging film of the obtained spectacle lens was measured using a non-contact film thickness measurement system "FF8" (manufactured by SystemRoad Co., Ltd).

(Evaluation of antifogging properties)

Breath was blown for 10 seconds onto the surface of the antifogging film of the obtained spectacle lens under the conditions of a room temperature of 25°C and a humidity of 40%. The state of the antifogging film from the start to the end of blowing the breath was visually observed, and evaluation was performed according to the following evaluation criteria.

A: Fogging is not observed at all (excellent antifogging properties)
B: Fogging disappears within 1 second
C: Fogging is observed, and it takes 10 seconds or more for the fogging to be eliminated (poor antifogging properties)

(Evaluation of appearance)

The appearance of the obtained spectacle lens was evaluated according to the following evaluation criteria.

A: No bubble is contained in the antifogging film, and a liquid pool originated from the antifogging film composition cannot be confirmed in the peripheral part of the spectacle lens.
B: No bubble is contained in the antifogging film, but a liquid pool originated from the antifogging film composition can be slightly confirmed in the peripheral part of the spectacle lens.
C: No bubble is contained in the antifogging film, but a liquid pool originated from the antifogging film composition can be confirmed in the peripheral part of the spectacle lens.
D: Bubbles are contained in the antifogging film.

[Example 1]

(Synthesis of (meth)acrylic resin)

Into a 500 ml-flask equipped with a stirrer, a thermometer, a condenser, and a nitrogen gas inlet tube, 150 parts by mass of propylene glycol monomethyl acetate (PGMAC) was charged, and the temperature was raised to 110°C.
Separately, 25 parts by mass of dimethylacrylamide (DMAA), 35 parts by mass of polycaprolactone-modified hydroxyethyl acrylate (PLACCEL FA2D, manufactured by Daicel Corporation), 10 parts by mass of 2-hydroxylethyl methacrylate (HEMA), 5 parts by mass of polydimethylsiloxane modified with methacrylate at one terminal (Silaplane FM-0721, manufactured by JNC Corporation, molecular weight: 5,000), 25 parts by mass of methyl methacrylate, and 1 part by mass of 1,1'-azobis(cyclohexane-1-carbonitrile) (V-40, manufactured by Wako Pure Chemical Industries, Ltd.) were mixed. The mixed monomer was added dropwise to the 500 ml-flask over 2 hours with stirring, and reacted for 5 hours.
The heating was stopped and the mixture was cooled to room temperature to obtain a resin solution containing a (meth)acrylic resin (solid content ratio: about 40 mass%).
The obtained (meth)acrylic resin had a hydroxyl value of 57 mgKOH/g, a number average molecular weight (Mn) of 12,000, a mass average molecular weight (Mw) of 44,000, and a polydispersity index (Mw/Mn) of 3.67. The glass transition temperature (Tg) of the (meth)acrylic resin calculated from the blending ratio of the used monomers based on the above Fox's equation was 32.8°C.

(Preparation of antifogging film composition)

The (meth)acrylic resin obtained above, polycaprolactone diol (PLACCEL 205U, manufactured by Daicel Corporation, molecular weight: 530, hydroxyl value: 207 to 217 mgKOH/g), a polyfunctional isocyanate compound (24A-100, manufactured by Asahi Kasei Corporation, biuret type hexamethylene diisocyanate, isocyanate group content: 23.5 mass%, solid content: 100 mass%), propylene glycol monomethyl ether acetate, diacetone alcohol, methyl ethyl ketone, t-butanol, and ethyl acetate were mixed to obtain a mixture. The respective contents of components in the obtained mixture are as follows.

(Meth)acrylic resin: 14.7 mass%
Polycaprolactone diol: 4.4 mass%
Polyfunctional isocyanate compound: 3.4 mass%
Propylene glycol monomethyl ether acetate: 28.5 mass%
Diacetone alcohol: 18.5 mass%
Methyl ethyl ketone: 13.5 mass%
t-Butanol: 8.5 mass%
Ethyl acetate: 8.5 mass%

Then, ethyl acetate, methyl ethyl ketone, and diacetone alcohol were added and mixed with the mixture to adjust the viscosity to 47.1 mPa • s and the solid content to 22.5 mass%, thereby preparing an antifogging film composition.
The amount of the (meth)acrylic resin does not represent the amount as a resin solution (solid content: mass%), but represents the amount of the resin (solid content) contained in the resin solution. The amount of the polyfunctional isocyanate compound also represents the amount as a solid content.
The measured value of the hydroxyl value of the mixture when 100 parts by mass of the (meth)acrylic resin and 30 parts by mass of a polyol compound (polycaprolactone diol) were uniformly mixed was 93 mgKOH/g.

(Production of spectacle lens)

Using a thiourethane-based plastic lens MERIA (power: S0.00) as a substrate, the obtained antifogging film composition was applied onto the substrate by a dipping method (pulling speed: 5 mm/sec) to form a coating film. Then, the coating film was heated at a temperature of 120°C for 120 minutes to produce a spectacle lens having a single antifogging film on the substrate. The results of the film thickness of the antifogging film, and evaluations of antifogging properties and appearance of the obtained spectacle lens are shown in Table 1.

[Examples 2 to 3, Comparative Examples 1 to 4]

Spectacle lenses were produced by the same operation as in Example 1 except that the antifogging film compositions were prepared using ethyl acetate, methyl ethyl ketone, and diacetone alcohol so that the solid content and the viscosity are the values shown in Table 1.

[Table 1]

Table 1

| | Physical properties of antifogging film composition | | Spectacle lens | | |
|---|---|---|---|---|---|
| | | | | Evaluation | |
| | Viscosity [mPa·s] | Solid content [mass%] | Film thickness of antifogging layer [μm] | Antifogging properties | Appearance |
| Example 1 | 47.1 | 22.5 | 11.3 | A | B |
| Example 2 | 24.5 | 18.5 | 6.4 | B | A |
| Example 3 | 75.9 | 24.5 | 13.2 | A | C |
| Comparative Example 1 | 129.0 | 27.5 | 18.2 | A | D |
| Comparative Example 2 | 107.0 | 26.5 | 16.2 | A | D |
| Comparative Example 3 | 87.9 | 25.5 | 14.4 | A | D |
| Comparative Example 4 | 18.0 | 16.5 | 5.0 | C | A |

As described above, the results of Examples and Comparative Examples show that a spectacle lens excellent in antifogging properties and appearance can be obtained by the method of Examples.

Finally, the embodiment of the present disclosure will be summarized.

The composition for an antifogging film of a spectacle lens according to an embodiment of the present disclosure has a viscosity at 15°C of 20 mPa · s or more and 80 mPa · s or less, and a solid content of 10 mass% or more and 25 mass% or less.

According to the embodiment described above, it is possible to provide a composition for an antifogging film of a spectacle lens which is capable of producing a spectacle lens excellent in antifogging properties and appearance, and a spectacle lens excellent in antifogging properties and appearance.

Each embodiment disclosed herein is an example in every respect and should not be restrictively understood. The scope of the present disclosure is defined not by the above description but by claims, and intends to include all modifications within meaning and a scope equal to claims.

In the present disclosure, as for the examples of components, contents, and physical properties, matters exemplified or described as a preferable range in the detailed description of the invention may be combined with each other arbitrarily.

In addition, by adjusting the composition described in Examples so as to be the composition described in the detailed description of the invention, the embodiment in the present disclosure can be performed in a similar manner to Examples in the entire claimed composition range.

## Claims

1. A composition for an antifogging film of a spectacle lens, wherein the composition has a viscosity at 15°C of 20 mPa · s or more and 80 mPa · s or less, and a solid content of 10 mass% or more and 25 mass% or less.

2. The composition for an antifogging film of a spectacle lens according to claim 1, wherein the viscosity at 15°C is 24 mPa · s or more.

3. The composition for an antifogging film of a spectacle lens according to claim 1 or 2, wherein the solid content is 17 mass% or more.

4. The composition for an antifogging film of a spectacle lens according to any one of claims 1 to 3, wherein the composition contains components (A) to (C):

   Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
   Component (B): a polyol compound (B); and
   Component (C): a polyfunctional isocyanate compound (C),

   [Chemical Formula 1]

   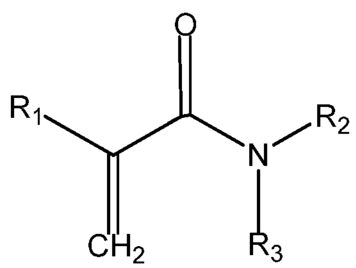

   (1)

   wherein $R_1$ is a hydrogen atom or a methyl group, $R_2$ and $R_3$ are each independently a hydrogen atom or an alkyl group having 1 to 3 carbon atoms, and $R_2$ and $R_3$ may be the same or different,

[Chemical Formula 2]

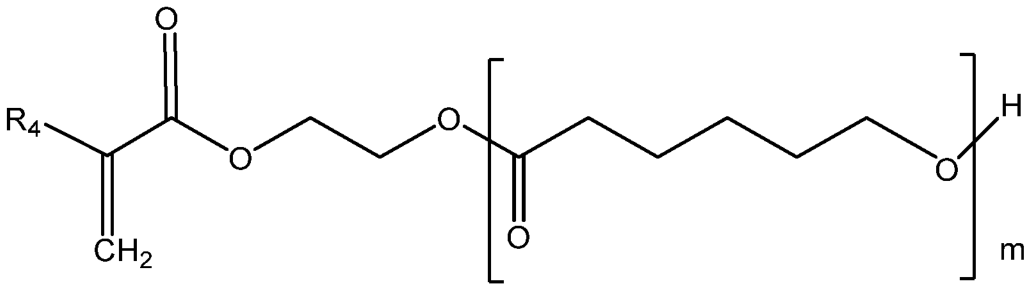

(2)

wherein $R_4$ is a hydrogen atom or a methyl group, and m is an integer of 1 to 5, and

[Chemical Formula 3]

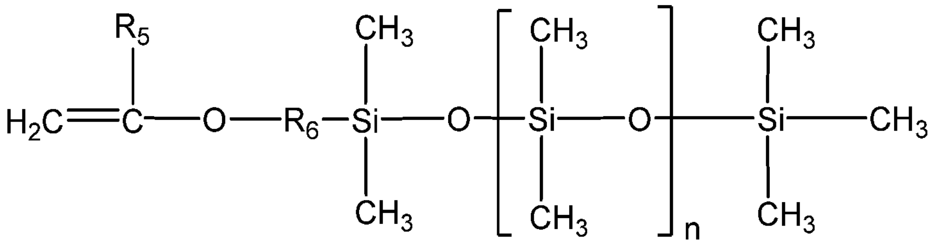

(3)

wherein $R_5$ is a hydrogen atom or a methyl group, $R_6$ is a divalent organic group, and n is 0 or an integer of 1 or more.

**5.** A spectacle lens comprising an antifogging film obtained by curing the composition for an antifogging film of a spectacle lens according to any one of claims 1 to 4.

**6.** The spectacle lens according to claim 5, wherein the antifogging film is an outermost layer.

**7.** The spectacle lens according to claim 5 or 6,

wherein the spectacle lens has a substrate, and
an antifogging film directly on the substrate.

**8.** The spectacle lens according to any one of claims 5 to 7, wherein the antifogging film is a single layer.

**INTERNATIONAL SEARCH REPORT**

International application No.
**PCT/JP2022/016495**

**A. CLASSIFICATION OF SUBJECT MATTER**

***G02C 7/02***(2006.01)i; ***C08G 18/40***(2006.01)i; ***C09D 5/00***(2006.01)i; ***G02B 1/10***(2015.01)i; ***G02C 7/00***(2006.01)i
FI: G02C7/02; G02C7/00; G02B1/10; C08G18/40 063; C09D5/00 Z

According to International Patent Classification (IPC) or to both national classification and IPC

**B. FIELDS SEARCHED**

Minimum documentation searched (classification system followed by classification symbols)

G02C7/02; C08G18/40; C09D5/00; G02B1/10; G02C7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2015-30803 A (CENTRAL GLASS CO LTD) 16 February 2015 (2015-02-16)<br>paragraphs [0001], [0031], example 5, table 1 | 1-3, 5-8<br>1-8 |
| Y | JP 2019-94468 A (NATOKO KK) 20 June 2019 (2019-06-20)<br>claims, paragraphs [0076], [0087] | 1-8 |
| Y | JP 2007-83447 A (FUJIFILM CORP) 05 April 2007 (2007-04-05)<br>paragraphs [0017], [0070]-[0072] | 1-8 |
| Y | JP 2016-110033 A (TOPPAN PRINTING CO LTD) 20 June 2016 (2016-06-20)<br>paragraph [0039] | 1-8 |
| A | JP 2000-75104 A (CANON INC) 14 March 2000 (2000-03-14)<br>entire text, all drawings | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/016495**

| Patent document cited in search report | Publication date (day/month/year) | Patent family member(s) | Publication date (day/month/year) |
|---|---|---|---|
| JP 2015-30803 A | 16 February 2015 | (Family: none) | |
| JP 2019-94468 A | 20 June 2019 | JP 6340539 B1 | |
| JP 2007-83447 A | 05 April 2007 | US 2010/0028554 A1<br>paragraphs [0029], [0132]-[0134]<br>WO 2007/034932 A1<br>KR 10-2008-0047619 A<br>CN 101304867 A | |
| JP 2016-110033 A | 20 June 2016 | (Family: none) | |
| JP 2000-75104 A | 14 March 2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000075104 A
- WO 2013005710 A